(19) Europäisches Patentamt
European Patent Office
Office européen des brevets

(11) **EP 4 686 161 A1**

(12) **EUROPEAN PATENT APPLICATION**
published in accordance with Art. 153(4) EPC

(43) Date of publication:
**28.01.2026  Bulletin 2026/05**

(21) Application number: **24784151.3**

(22) Date of filing: **28.03.2024**

(51) International Patent Classification (IPC):
**H04L 27/26** $^{(2006.01)}$

(52) Cooperative Patent Classification (CPC):
**H04L 27/26**

(86) International application number:
**PCT/CN2024/084258**

(87) International publication number:
**WO 2024/208066 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023  CN 202310405730
19.05.2023  CN 202310575837**

(71) Applicant: **HUAWEI TECHNOLOGIES CO., LTD.
Shenzhen 518129 (CN)**

(72) Inventor: **LI, Qiang
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND COMMUNICATION APPARATUS**

(57) This application provides a communication method and a communication apparatus. The method provides a solution that can mitigate impact of frequency selective fading on frequency offset correction. Specifically, a network device sends, to a terminal device by using M subcarriers, a frequency reference signal generated by the network device, where a ratio of a sum of energy of the frequency reference signal carried by N subcarriers in the M subcarriers to total energy of the frequency reference signal is not equal to a ratio of N to M, N<M, and both N and M are positive integers. Signal energy of the M subcarriers is not equally distributed. This helps distribution of energy of the frequency reference signal be mainly concentrated on one or more of the M subcarriers, so that frequency selective fading undergone by subcarriers with high energy in the M subcarriers is basically the same, and the impact of the frequency selective fading on the frequency offset correction can be mitigated.

Network device 110 — Terminal device 120

S610: Send a frequency reference signal 1 by using M frequency domain units, where a ratio of a sum of energy of the frequency reference signal 1 carried by N frequency domain units in the M frequency domain units to total energy of the frequency reference signal 1 is not equal to a ratio of N to M

S620: Perform frequency synchronization between the network device 110 and the terminal device 120 based on the frequency reference signal 1

FIG. 6

## Description

This application claims priority to Chinese Patent Application No. 202310405730.9, filed with the China National Intellectual Property Administration on April 7, 2023 and entitled "METHOD FOR FREQUENCY OFFSET CORRECTION", and to Chinese Patent Application No. 202310575837.8, filed with the China National Intellectual Property Administration on May 19, 2023 and entitled "COMMUNICATION METHOD AND COMMUNICATION APPARATUS", both of which are incorporated herein by reference in their entireties.

## TECHNICAL FIELD

This application relates to the field of communication technologies, and more specifically, to a communication method and a communication apparatus.

## BACKGROUND

A receive end may demodulate a frequency shift keying (frequency shift keying, FSK) signal or an on-off keying (on-off keying, OOK) signal via an envelope detector receiver. Specifically, the receive end first filters and amplifies a radio frequency signal (for example, the OOK signal or the FSK signal) sent on a radio frequency (for example, an FRF=3.5 GHz), and mixes a local carrier signal generated by a local oscillator (local oscillator, LO) with the amplified radio frequency signal, to migrate the radio frequency signal from the radio frequency to an intermediate frequency (intermediate frequency, IF) (for example, an FIF=10 MHz). Then, the receive end amplifies and filters an intermediate frequency signal (corresponding to the foregoing radio frequency signal) on the intermediate frequency. When stability of the LO is poor, a deviation may exist between a frequency of the local carrier signal generated by the LO and an ideal frequency. The deviation affects demodulation performance of the receive end, and further affects frequency synchronization between the receive end and a transmit end.

Currently, a solution in which the receive end performs frequency offset correction based on a frequency reference signal is proposed, to reduce the deviation between the frequency of the local carrier signal and the ideal frequency. However, in the foregoing solution, impact of frequency selective fading on the frequency offset correction is ignored. As a result, good frequency synchronization cannot be implemented between the receive end and the transmit end. Therefore, how to mitigate the impact of the frequency selective fading on the frequency offset correction becomes a technical problem to be urgently resolved currently.

## SUMMARY

This application provides a communication method and a communication apparatus, to mitigate impact of frequency selective fading on frequency offset correction.

According to a first aspect, a communication method is provided. The communication method includes: A network device generates a frequency reference signal, where the frequency reference signal is used for frequency synchronization between the network device and a terminal device; and the network device sends the frequency reference signal to the terminal device by using M frequency domain units. A ratio of a sum of energy of the frequency reference signal carried by N frequency domain units in the M frequency domain units to total energy of the frequency reference signal is not equal to a ratio of N to M. Both N and M are positive integers. N is less than M.

In the foregoing solution, energy of the frequency reference signal in the M frequency domain units is not equally distributed. This helps distribution of the energy of the frequency reference signal be mainly concentrated on one or more frequency domain units in the M frequency domain units, so that frequency selective fading undergone by subcarriers with high energy in the M frequency domain units is basically the same, and impact of the frequency selective fading on frequency offset correction can be mitigated.

In a possible implementation, the method further includes: The network device sends a configuration parameter of the frequency reference signal to the terminal device. The configuration parameter includes at least one of the following: a sending periodicity of the frequency reference signal, a bandwidth of the frequency reference signal, duration of the frequency reference signal, a frequency domain sequence used by the frequency reference signal, and a window function used by the frequency reference signal.

The network device sends the configuration parameter of the frequency reference signal to the terminal device. This helps the terminal device determine the frequency reference signal and perform the frequency synchronization with the network device based on the frequency reference signal.

In a possible implementation, the method further includes: The network device sends a synchronization signal to the terminal device. The synchronization signal is used for time synchronization between the network device and the terminal device. A sending periodicity of the synchronization signal is the same as or different from the sending periodicity of the frequency reference signal.

In this way, the terminal device may implement the time synchronization with the network device based on the synchronization signal.

In addition, the terminal device may further implement cell discovery between the terminal device and the network device, measure quality of a received signal, and the like based on the synchronization signal.

According to a second aspect, a communication method is provided. The communication method includes: A terminal device receives a frequency reference signal from a network device by using M frequency domain units, where the frequency reference signal is used for frequency synchronization between the network device and the terminal device; and the terminal device performs the frequency synchronization based on the frequency reference signal. A ratio of a sum of energy of the frequency reference signal carried by N frequency domain units in the M frequency domain units to total energy of the frequency reference signal is not equal to a ratio of N to M. Both N and M are positive integers. N is less than M.

Energy of the frequency reference signal in M subcarriers is not equally distributed. This helps distribution of energy of the frequency reference signal be mainly concentrated on one or more of the M subcarriers, so that frequency selective fading undergone by subcarriers with high energy in the M subcarriers is basically the same, and impact of the frequency selective fading on the frequency offset correction can be mitigated.

In a possible implementation, the method further includes: The terminal device receives a configuration parameter of the frequency reference signal from the network device. The configuration parameter includes at least one of the following: a sending periodicity of the frequency reference signal, a bandwidth of the frequency reference signal, duration of the frequency reference signal, a frequency domain sequence used by the frequency reference signal, and a window function used by the frequency reference signal.

In a possible implementation, the method further includes: The terminal device receives a synchronization signal from the network device, where the synchronization signal is used for time synchronization between the network device and the terminal device; and the terminal device performs the time synchronization based on the synchronization signal. A sending periodicity of the synchronization signal is the same as or different from the sending periodicity of the frequency reference signal

With reference to the solution according to either of the first aspect and the second aspect, the N frequency domain units are consecutive or discrete frequency domain units.

When the N frequency domain units meet continuous distribution, and the distribution of the energy of the frequency reference signal is mainly concentrated on the N frequency domain units, the N consecutive frequency domain units undergo close fading degrees, so that impact of the frequency selective fading on the frequency synchronization performed by the terminal device can be mitigated. When the N frequency domain units meet discrete distribution, and the distribution of the energy of the frequency reference signal is mainly concentrated on the N frequency domain units, the N discrete frequency domain units undergo close fading degrees, so that impact of the frequency selective fading on the frequency synchronization performed by the terminal device can be mitigated.

With reference to the solution according to either of the first aspect and the second aspect, the N frequency domain units are distributed at two ends of the M frequency domain units.

Specifically, a passband bandwidth of a filter of the terminal device is close to a bandwidth of the M frequency domain units. When the N frequency domain units are distributed at the two ends of the M frequency domain units, if a frequency offset exists, main energy of the frequency reference signal deviates from a passband of a filter of a receiver of the terminal device, causing a sharp decrease in received power. Therefore, the terminal device can determine that the frequency deviation exists and perform correction.

With reference to the solution according to either of the first aspect and the second aspect, N is less than 0.2M, and the ratio of the sum of the energy of the frequency reference signal carried by the N frequency domain units to the total energy of the frequency reference signal is greater than or equal to 0.2.

When the N frequency domain units mainly carry the energy of the frequency reference signal, the distribution of the energy of the frequency reference signal is mainly concentrated on a few frequency domain units by setting a value of N to be less than 0.2M.

With reference to the solution according to either of the first aspect and the second aspect, a sum of amplitudes of symbols transmitted by the N frequency domain units is greater than a sum of amplitudes of symbols transmitted by frequency domain units other than the N frequency domain units in the M frequency domain units.

In this way, distribution of more than 50% energy of the frequency reference signal can be concentrated on the N frequency domain units, so that the impact of the frequency selective fading on the frequency offset correction can be effectively mitigated.

With reference to the solution according to either of the first aspect and the second aspect, a sum of energy of the frequency domain units other than the N frequency domain units in the M frequency domain units is zero.

In this way, the distribution of the energy of the frequency reference signal can be mainly concentrated on the N frequency domain units, so that frequency selective fading undergone by the N frequency domain units is basically the same, and impact of the frequency selective fading on the frequency offset correction can be mitigated.

With reference to the solution according to either of the first aspect and the second aspect, a modulation scheme of the frequency reference signal includes at least one of the following: 16-quadrature amplitude modulation QAM, 64-QAM, 256-QAM, or 1024-QAM.

According to the foregoing modulation scheme, in this application, an appropriate symbol is selected from a constellation diagram corresponding to the modulation scheme for transmission, so that the energy of the frequency reference signal can be unequally distributed on the M frequency domain units.

With reference to the solution according to either of the first aspect and the second aspect, the sending periodicity of the frequency reference signal is an integer multiple of the sending periodicity of the synchronization signal.

Because LOs of some devices are not precise enough, a large time deviation is to be accumulated in a short period of time. Therefore, the time synchronization needs to be performed at a short periodicity. An accumulation rate of frequency errors is far lower than that of time errors. The frequency synchronization may be performed at a long periodicity. Therefore, the sending periodicity of the frequency reference signal needs to be greater than the sending periodicity of the synchronization signal.

In a design, the sending periodicity of the frequency reference signal is an integer multiple, for example, N times, of the sending periodicity of the synchronization signal. In addition, one synchronization signal in synchronization signals sent every N times and the frequency reference signal are sent together. The synchronization signal may be first sent, and then the frequency reference signal is sent, or the frequency reference signal is first sent, and then the synchronization signal is sent. In this way, the terminal device determines a sending location of the frequency reference signal, and completes the time synchronization and the frequency synchronization.

In another design, the sending periodicity of the frequency reference signal is an integer multiple, for example, N times, of the sending periodicity of the synchronization signal, and the frequency reference signal and the synchronization signal are sent at non-adjacent locations. In this way, the network device flexibly configures a resource used for sending a signal.

According to a third aspect, a communication apparatus is provided. The communication apparatus may be a network device, or may be an apparatus (for example, a chip, a chip system, or a circuit) in the network device, or an apparatus that can be used in cooperation with the network device.

In a possible implementation, the communication apparatus includes modules or units that one-to-one correspond to the methods/operations/steps/actions described in any implementation of the first aspect. The module or the unit may be implemented by a hardware circuit, software, or a hardware circuit in combination with software.

In a possible implementation, the communication apparatus includes: a processing unit, configured to generate a frequency reference signal, where the frequency reference signal is used for frequency synchronization between the communication apparatus and a terminal device; and a transceiver unit, configured to send the frequency reference signal to the terminal device by using M frequency domain units. A ratio of a sum of energy of the frequency reference signal carried by N frequency domain units in the M frequency domain units to total energy of the frequency reference signal is not equal to a ratio of N to M. Both N and M are positive integers. N is less than M.

The communication apparatus according to the third aspect may be further configured to perform the method according to any implementation of the first aspect.

According to a fourth aspect, a communication apparatus is provided. The communication apparatus may be a terminal device, or may be an apparatus (for example, a chip, a chip system, or a circuit) in the terminal device, or an apparatus that can be used in cooperation with the terminal device.

In a possible implementation, the communication apparatus may include modules or units that one-to-one correspond to the methods/operations/steps/actions described in the second aspect. The module or the unit may be implemented by a hardware circuit, software, or a hardware circuit in combination with software.

In a possible implementation, the communication apparatus includes: a transceiver unit, configured to receive a frequency reference signal from a network device by using M frequency domain units, where the frequency reference signal is used for frequency synchronization between the network device and the communication apparatus; and a processing unit, configured to perform the frequency synchronization based on the frequency reference signal. A ratio of a sum of energy of the frequency reference signal carried by N frequency domain units in the M frequency domain units to total energy of the frequency reference signal is not equal to a ratio of N to M. Both N and M are positive integers. N is less than M.

The communication apparatus according to the fourth aspect may be further configured to perform the method according to any implementation of the second aspect.

According to a fifth aspect, a communication apparatus is provided. The communication apparatus includes a processor. The processor is configured to cause, by executing a computer program or instructions, or by using a logic circuit, the communication apparatus to perform the method according to any one of the first aspect and the possible implementations of the first aspect; or the communication apparatus to perform the method according to any one of the second aspect and the possible implementations of the second aspect.

In a possible implementation, the communication apparatus further includes a memory. The memory is configured to store the computer program or the instructions.

In a possible implementation, the communication apparatus further includes a communication interface. The communication interface is configured to input a signal and/or output a signal.

According to a sixth aspect, a communication apparatus is provided. The communication apparatus includes a logic circuit and an input/output interface. The input/output interface is configured to input a signal and/or output a signal. The logic circuit is configured to perform the method according to any one of the first aspect and the possible implementations of the first aspect; or the logic circuit is configured to perform the method according to any one of the second aspect and the possible implementations of the second aspect.

According to a seventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided. The computer program product includes instructions. When the instructions are run on a computer, the method according to any one of the first aspect and the possible implementations of the first aspect is performed, or the method according to any one of the second aspect and the possible implementations of the second aspect is performed.

For descriptions of beneficial effects of the third aspect to the eighth aspect, refer to the descriptions of the first aspect and the second aspect.

## BRIEF DESCRIPTION OF DRAWINGS

FIG. 1 is a diagram of a communication system 100 to which an embodiment of this application is applicable;
FIG. 2 is a diagram of a waveform of a signal using OOK modulation;
FIG. 3 is a diagram of a waveform of a signal using FSK modulation;
FIG. 4 is a diagram of impact of a frequency offset;
FIG. 5 is a diagram of a solution for frequency offset correction;
FIG. 6 is a schematic interaction flowchart of a communication method 600 according to an embodiment of this application;
FIG. 7 is a diagram of a relationship between a sending periodicity of a frequency reference signal and a sending periodicity of a synchronization signal;
FIG. 8 is a diagram of a correspondence between a frequency reference signal and a subcarrier;
FIG. 9 is a diagram of another correspondence between a frequency reference signal and a subcarrier;
FIG. 10 is a diagram of still another correspondence between a frequency reference signal and a subcarrier;
FIG. 11 is a block diagram of a communication apparatus 1100 according to an embodiment of this application;
FIG. 12 is a block diagram of a communication apparatus 1200 according to an embodiment of this application;
FIG. 13 is a block diagram of a communication apparatus 1300 according to an embodiment of this application;
FIG. 14 is a block diagram of a communication apparatus 1400 according to an embodiment of this application; and
FIG. 15 is a block diagram of a communication apparatus 1500 according to an embodiment of this application.

## DESCRIPTION OF EMBODIMENTS

For ease of understanding of embodiments of this application, the following descriptions are provided first.

1. In this application, unless otherwise stated, "a plurality of" means two or more.
2. In this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other number terms (if existent) are used for distinguishing between similar objects, but do not necessarily indicate a specific order or sequence. Data termed in such a way is interchangeable in appropriate circumstances so that embodiments described herein can be implemented in other orders than the order illustrated or described herein.

In addition, any embodiment or design scheme described as an "example" or "for example" in this application should not be explained as being more preferred or having more advantages than another embodiment or design scheme. Exactly, use of the terms such as "example" or "for example" is intended to present a related concept in a specific manner for ease of understanding.

4. The terms "include", "have", and variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

5. In this application, the term "preconfiguration" may include predefinition, for example, definition in a protocol. "Predefinition" may be implemented by prestoring corresponding code or a corresponding table in a device, or may be implemented in another manner of indicating related information. A specific implementation of the "predefinition" is not limited in this application.

6. The term "storage" or "store" in this application may mean "being stored" in one or more memories. The one or more memories may be separately disposed, or may be integrated into an encoder or a decoder, a processor, or a communication apparatus. Alternatively, the one or more memories may be partially disposed separately, and partially integrated into a decoder, a processor, or a communication apparatus. A type of the memory may be a storage medium in any form. This is not limited.

7. The term "protocol" in this application may be a standard protocol in the communication field, for example, may include a 4$^{th}$ generation (4$^{th}$ generation, 4G) network protocol, a 5$^{th}$ generation (5$^{th}$ generation, 5G) network protocol, a new radio (new radio, NR) protocol, a 5.5G network protocol, a 6$^{th}$ generation (6$^{th}$ generation, 6G) network protocol, and related protocols used in future communication systems. This is not limited in this application.

8. Arrows or blocks shown by dashed lines in the diagrams of the accompanying drawings in the specification of this application indicate optional steps or optional modules.

9. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.

First, a communication system to which an embodiment of this application is applicable is described.

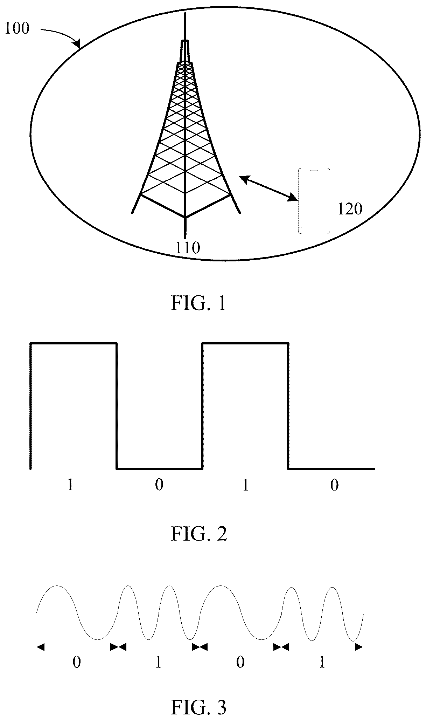

FIG. 1 is a diagram of a communication system 100 to which an embodiment of this application is applicable. As shown in FIG. 1, the communication system 100 includes a network device 110 and a terminal device 120.

The terminal device 120 is a device having a wireless transceiver function. The terminal device may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device 120 may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device, or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an communication network evolved after 5G, or the like. This is not limited in this application.

A communication apparatus configured to implement a function of the terminal device 120 may be a terminal device, or may be an apparatus that can support the terminal device in implementing the function, for example, a chip system. The apparatus may be installed in a terminal device or used in cooperation with the terminal device. In this application, the chip system may include a chip, or may include a chip and another discrete component.

The network device 110 is a device having a wireless transceiver function, and is configured to communicate with the terminal device 120. The network device 110 may be a node in a radio access network (radio access network, RAN), and may be referred to as a base station, or may be referred to as a RAN node. The network device 110 may be an evolved NodeB (evolved NodeB, eNB, or eNodeB) of long term evolution (long term evolution, LTE), or a base station in a 5G network, for example, a gNodeB (gNB), or a base station in a public land mobile network (public land mobile network, PLMN) evolved after 5G, a broadband network service gateway (broadband network gateway, BNG), an aggregation switch, a 3$^{rd}$ generation partnership project (the 3$^{rd}$ generation partnership project, 3GPP) access device, or the like.

A RAN may be configured as a RAN defined in the 3GPP protocol, an open radio access network (open radio access network, O-RAN), or a cloud access network (cloud radio access network, C-RAN). The network device 110 may further include various forms of base stations, for example, a macro base station, a micro base station (also referred to as a small station), a relay station, a transmission and reception point (transmission and reception point, TRP), a transmission point (transmission point, TP), a mobile switching center, a device that bears a base station function in device-to-device (device-to-device, D2D) communication, vehicle-to-everything (vehicle-to-everything, V2X) communication, and machine-to-machine (machine-to-machine, M2M) communication, a network device in a non-terrestrial network (non-terrestrial network, NTN), and the like. This is not specifically limited.

The network device 110 may further include a network element or a module that implements some functions of the base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be implemented by a baseband unit (baseband unit, BBU) of the base station. A function of the RU may be implemented by a radio frequency device of the base station. For example, the radio frequency device of the base station may be a remote radio processing unit (remote radio unit, RRU), a pico remote radio unit (pico remote radio unit, pRRU), an active antenna processing unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between the DU and the RU in an O-RAN system, or the like. This is not limited.

A communication apparatus configured to implement a function of the network device 110 may be a network device, or may be an apparatus that can support the network device in implementing the function, for example, a chip system. The apparatus may be installed in a network device or used in cooperation with the network device. In embodiments of this application, the chip system may include a chip, or may include a chip and another discrete component.

It should be noted that the communication system 100 may alternatively be the following system: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system, a 6G system, or an NTN system, for example, an inter-satellite communication system or a satellite communication system. The satellite communication system includes a satellite base station and a terminal device. The satellite base station provides a communication service for the terminal device. The satellite base station may communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The communication system 100 may alternatively be a terrestrial cellular communication system, a high altitude platform station (high altitude platform station, HAPS) communication system, a V2X system, an integrated access and backhaul (integrated access and backhaul, IAB) system, a reconfigurable intelligent surface (reconfigurable intelligent surface, RIS) communication system, or the like. This is not limited.

Then, some technical content in this application is briefly described.

1. OOK modulation

FIG. 2 is a diagram of a waveform of a signal using OOK modulation. As shown in FIG. 2, when the OOK modulation is used for the signal, each bit (that is, an encoded bit) corresponds to one symbol (symbol). Similarly, a symbol may also be referred to as a chip (chip), or may be referred to as another name. This is not limited herein. When the bit is 1, a signal is sent within a length of the symbol (to be specific, signal transmission power is not 0 within the length of the symbol). When the bit is 0, no signal is sent within a length of the symbol (to be specific, signal transmission power is 0 within the length of the symbol). As shown in FIG. 2, the waveform may represent 4 bits: 1010.

2. FSK modulation

FIG. 3 is a diagram of a waveform of a signal using FSK modulation. As shown in FIG. 3, when the FSK modulation is used for the signal, different frequency resources are used for different information. For example, 2FSK carries 1-bit information. When an information bit is 0, information is sent on a frequency resource F0, and no information is sent on a frequency resource F1. When an information bit is 1, information is sent on a frequency resource F1, and no information is sent on a frequency resource F0. It is assumed that F0<F1, and a waveform of an FSK signal whose information is 0101 is shown in FIG. 3. In a 1st symbol and a 3rd symbol, a frequency of the signal is low, and in a 2nd symbol and a 4th symbol, the frequency of the signal is high. When demodulating the signal, a receive end may compare power on F0 and power on F1 to determine whether the sent information is 0 or 1.

3. Frequency offset

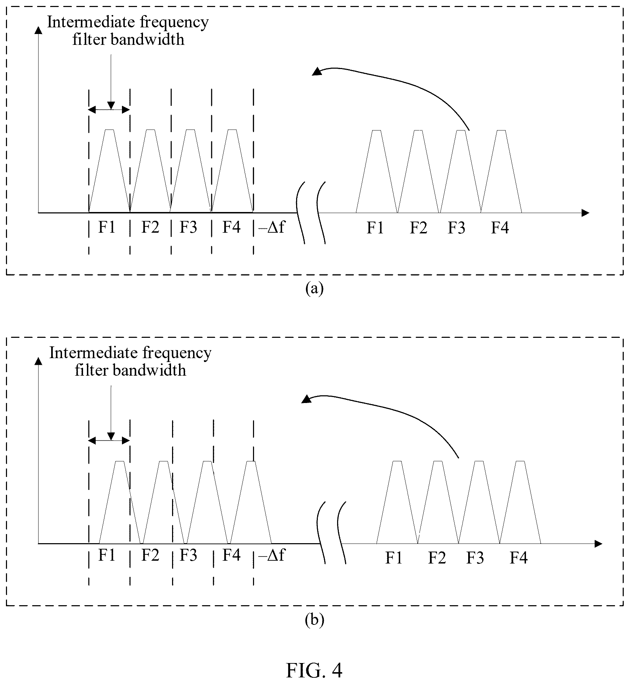

As described in the background, a receive end performs down-conversion on a received radio frequency signal to an intermediate frequency by using a local carrier generated by an LO. In consideration of costs, some devices may use LOs with poor stability, and a frequency offset (frequency offset) (referred to as a frequency offset in the following) may exist between a frequency of a local carrier signal generated by the LO and an ideal frequency. When the frequency offset is large, a waveform of a target channel cannot be accurately down-converted to a passband range of a filter, causing a loss of signal energy. In addition, signals transmitted in adjacent bandwidths may be down-converted to the passband range of the filter, resulting in mutual interference between a plurality of signals. Refer to FIG. 4.

FIG. 4 is a diagram of impact of a frequency offset. It is assumed that radio frequencies of 4-FSK or four parallel OOK signals are {F1, F2, F3, F4}, respectively. (a) in FIG. 4 shows a case in which a frequency offset is very small (or no frequency offset exists). After down-conversion is performed, a target channel is accurately migrated to an intermediate frequency, and a spectrum of a signal accurately falls within a passband range of four parallel filters on the intermediate frequency. After filtering is performed, each channel retains a signal of the target channel, and signals in adjacent bandwidths are filtered out. (b) in FIG. 4 shows a case in which a frequency offset is large. After down-conversion is performed, a spectrum of a target channel cannot be accurately migrated to an intermediate frequency. A filter filters out a part of a target signal. Some signals in adjacent bandwidths are subject to subsequent processing of a receiver through the filter, causing interference.

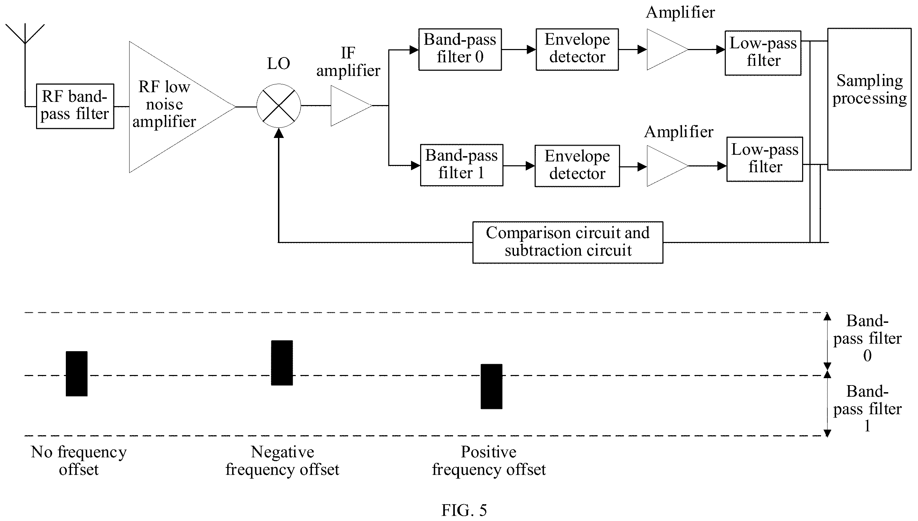

It can be learned from the foregoing descriptions that when the frequency offset exists between the frequency of the local carrier signal and the ideal frequency, the frequency offset affects frequency synchronization between the receive end and a transmit end. To resolve the frequency offset, currently, a solution in which the receive end performs frequency offset correction based on a frequency reference signal is proposed. Refer to FIG. 5.

FIG. 5 is a diagram of a solution for frequency offset correction. As shown in FIG. 5, a receiver includes an antenna, an RF band-pass filter, an RF low noise amplifier, an LO, an IF amplifier, a band-pass filter 0, a band-pass filter 1, envelope detectors, amplifiers, low-pass filters, a sampling processing module, a comparison circuit and a subtraction circuit, and the like. For descriptions of a structure of an envelope detection receiver, refer to the conventional technology. Details are not described herein. The receiver is of a structure of an envelope detection receiver with two parallel OOK signals. The receive end determines a frequency offset direction by comparing amplitudes of two signals output by two envelope detectors, that is, determines through comparison a value relationship between an amplitude of a signal output by the band-pass filter 1 and an amplitude of a signal output by the band-pass filter 0.

When a negative frequency offset exists, energy of the signal passing through the band-pass filter 1 is lower, energy of the signal passing through the band-pass filter 0 is higher, a level of the signal output by the band-pass filter 1 is lower, and a level of the signal output by the band-pass filter 0 is higher. The receive end determines a signal level difference between the band-pass filter 1 and the band-pass filter 0 by using the subtraction circuit and the comparison circuit. The receive end may adjust a frequency of the LO based on the signal level difference. For example, when the negative frequency offset exists, the receive end increases the frequency of the LO. After the adjustment is completed, the receive end may continue the foregoing steps. The receive end may gradually reduce the negative frequency offset over a plurality of cycles. After the negative frequency offset is corrected, when the energy of the signal passing through the band-pass filter 1 is basically close to the energy of the signal passing through the band-pass filter 0, the receive end does not perform the adjustment.

When a positive frequency offset exists, energy of the signal passing through the band-pass filter 0 is lower, energy of the signal passing through the band-pass filter 1 is higher, a level of the signal output by the band-pass filter 0 is lower, and a level of the signal output by the band-pass filter 1 is higher. The receive end determines a signal level difference between the band-pass filter 0 and the band-pass filter 1 by using the subtraction circuit and the comparison circuit. The receive end may adjust a frequency of the LO based on the signal level difference. For example, when the positive frequency offset exists, the receive end decreases the frequency of the LO. After the adjustment is completed, the receive end may continue the foregoing steps. The receive end may gradually reduce the positive frequency offset over a plurality of cycles. After the positive frequency offset is corrected, when the energy of the signal passing through the band-pass filter 1 is basically close to the energy of the signal passing through the band-pass filter 0, the receive end may not perform the adjustment.

However, in the foregoing solution, impact of frequency selective fading on the frequency offset correction is ignored. Energy of the frequency reference signal in a bandwidth occupied by the frequency reference signal is equally distributed. If the frequency reference signal is interfered with only by white noise, the energy of the frequency reference signal received by the receive end is also approximately equally distributed in the bandwidth occupied by the frequency reference signal. The foregoing solution can achieve high precision. However, the frequency reference signal also undergoes the frequency selective fading, and the receive end receives signals with different energy on different frequencies. As a result, a residual frequency offset (residual carrier frequency offset) exists between a frequency of a local carrier signal obtained through the frequency offset correction and the ideal frequency. This affects the frequency synchronization between the receive end and the transmit end.

In view of this, this application provides a communication method and a communication apparatus, to mitigate the impact of the frequency selective fading on the frequency offset correction.

The communication method in embodiments of this application is further described.

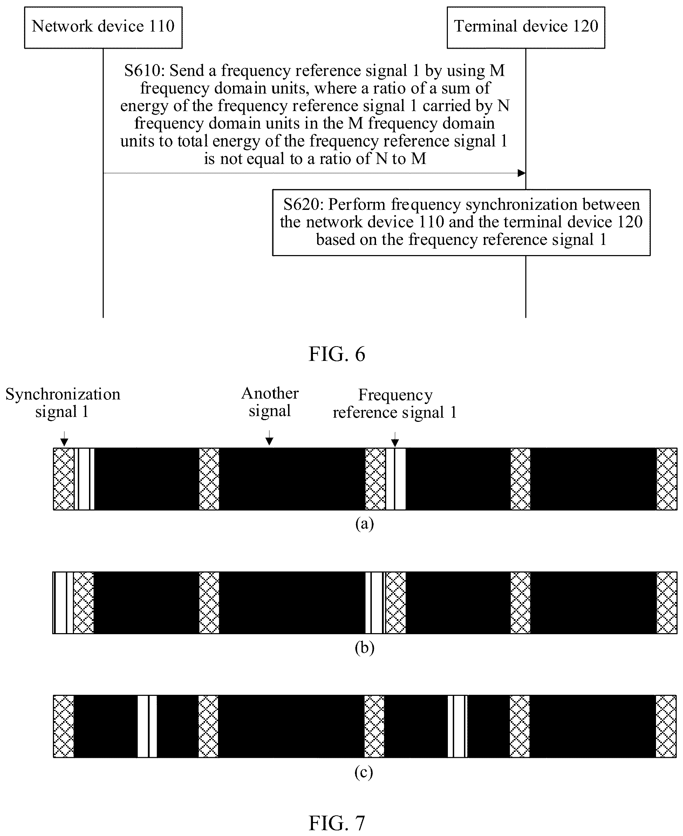

FIG. 6 is a schematic interaction flowchart of a communication method 600 according to an embodiment of this application. The method shown in FIG. 6 may be performed by a terminal device 120 and a network device 110, or may be performed by a module and/or a component (for example, a chip or an integrated circuit) that has a corresponding function and that is installed in the terminal device 120 and the network device 110. This is not limited. The following uses the terminal device 120 and the network device 110 as an example for description. The method 600 includes the following steps.

S610: The network device 110 sends a frequency reference signal 1 to the terminal device 120 by using M frequency domain units.

Correspondingly, the terminal device 120 receives the frequency reference signal 1. The frequency reference signal 1 is used for frequency synchronization between the network device 110 and the terminal device 120.

The network device 110 may periodically or aperiodically send the frequency reference signal 1.

The frequency domain unit may be a subcarrier (subcarrier), a physical resource block (physical resource block, PRB), a resource block (resource block, RB), or the like. This is not limited. For ease of description, the following uses an example in which the frequency domain unit is a subcarrier for description.

Specifically, that the network device 110 sends the frequency reference signal 1 to the terminal device 120 by using the M subcarriers may be: The network device 110 sends the frequency reference signal 1 by using some or all of the M subcarriers. When the network device 110 sends the frequency reference signal 1 by using some of the M subcarriers, the network device 110 may continue to occupy unused subcarriers in the M subcarriers; or the network device 110 may send, on unused subcarriers in the M subcarriers, a signal whose energy is 0.

When the network device 110 sends the frequency reference signal 1 by using the M subcarriers, energy of the frequency reference signal 1 is distributed on the M subcarriers. Specifically, when the network device 110 sends the frequency reference signal 1 by using all of the M subcarriers, energy of the frequency reference signal 1 is distributed on all the subcarriers. When the network device 110 sends the frequency reference signal 1 by using some of the M subcarriers, energy of the frequency reference signal 1 is distributed on the subcarriers. Therefore, the energy of the frequency reference signal 1 is distributed on a subcarrier that is actually used for transmitting the frequency reference signal 1.

In this embodiment of this application, the energy of the frequency reference signal 1 is not equally distributed on each of the M subcarriers, and there is one or more subcarriers with high energy. In a possible implementation, a ratio of a sum of energy of the frequency reference signal 1 carried on N subcarriers in the M subcarriers to total energy of the frequency reference signal 1 is greater than or less than a ratio of N to M. Both N and M are positive integers. N is less than M.

For example, N=2, M=10, and a ratio of a sum of energy of the frequency reference signal 1 carried on the two subcarriers to the total energy of the frequency reference signal 1 is greater than or equal to 0.2.

In an example, when the ratio of the sum of the energy of the frequency reference signal 1 carried on the N subcarriers to the total energy of the frequency reference signal 1 is greater than or equal to the ratio of N to M, it means that the energy of the frequency reference signal 1 is mainly concentrated on one or more subcarriers, and the one or more subcarriers may be related to the N subcarriers. In another example, when the ratio of the sum of the energy of the frequency reference signal 1 carried on the N subcarriers to the total energy of the frequency reference signal 1 is less than the ratio of N to M, it means that the energy of the frequency reference signal 1 is mainly concentrated on one or more subcarriers, and the one or more subcarriers are unrelated to the N subcarriers. For ease of description, in this application, an example in which distribution of the energy of the frequency reference signal 1 is mainly concentrated on the N subcarriers is used for description.

In another possible implementation, the M subcarriers include at least two subcarriers that respectively carry different energy of the frequency reference signal 1. In this way, the energy of the frequency reference signal 1 is not equally distributed on the M subcarriers.

S620: The terminal device 120 performs the frequency synchronization between the network device 110 and the terminal device 120 based on the frequency reference signal 1.

Specifically, for content of the frequency synchronization performed by the terminal device 120 based on the frequency reference signal 1, refer to FIG. 5.

In conclusion, energy of the frequency reference signal in the M frequency domain units is not equally distributed. This helps the distribution of the energy of the frequency reference signal be mainly concentrated on one or more of the M frequency domain units, so that frequency selective fading undergone by subcarriers with high energy in the M frequency domain units is basically the same, and impact of the frequency selective fading on frequency offset correction is mitigated.

In the method 600, the network device 110 may further send a configuration parameter of the frequency reference signal 1 to the terminal device 120. The terminal device 120 may determine the frequency reference signal 1 based on the configuration parameter of the frequency reference signal 1, to perform the frequency synchronization between the terminal device 120 and the network device 110.

In a possible implementation, the configuration parameter of the frequency reference signal 1 includes at least one of the following: a sending periodicity of the frequency reference signal 1, a bandwidth of the frequency reference signal 1, duration of the frequency reference signal 1, a frequency domain sequence used by the frequency reference signal 1, and a window function used by the frequency reference signal 1. The terminal device 120 may determine the frequency reference signal 1 based on one or more of the foregoing parameters, and perform the frequency synchronization with the network device 110 based on the frequency reference signal 1. For the frequency domain sequence and the window function used by the frequency reference signal 1, refer to descriptions below.

In a possible implementation, in this application, the terminal device 120 can send, to the network device 110, request information used for requesting to obtain the configuration parameter of the frequency reference signal 1. The network device 110 sends the configuration parameter of the frequency reference signal 1 to the terminal device 120 based on the request information. In this application, the network device 110 can alternatively actively send the configuration parameter of the frequency reference signal 1 to the terminal device 120. In this application, the configuration parameter of the frequency reference signal 1 can alternatively be predefined in a protocol. The terminal device 120 does not need to obtain the configuration parameter of the frequency reference signal 1 from the network device 110. This helps reduce signaling overheads between the terminal device 120 and the network device 110.

In the method 600, the network device 110 may further send a synchronization signal 1 to the terminal device 120. The synchronization signal 1 is used for time synchronization (also referred to as time error correction) between the terminal device 120 and the network device 110. A sending periodicity of the synchronization signal 1 may be the same as or different from the sending periodicity of the frequency reference signal 1. In this way, the terminal device 120 can implement the time synchronization with the network device 110 based on the synchronization signal 1. In addition, the terminal device 120 may further implement cell discovery between the terminal device 120 and the network device 110, measure quality of a received signal, and the like based on the synchronization signal 1.

When the sending periodicity of the synchronization signal 1 is different from the sending periodicity of the frequency reference signal 1, the sending periodicity of the frequency reference signal 1 may be an integer multiple of the sending periodicity of the synchronization signal 1. A sequence in which the network device 110 sends the frequency reference signal 1 and the synchronization signal 1 to the terminal device 120 is not limited in this application.

Specifically, because LOs of some devices are not precise enough, a large time deviation is to be accumulated in a short period of time. Therefore, the time synchronization needs to be performed at a short periodicity. An accumulation rate of frequency errors is far lower than that of time errors. The frequency synchronization is performed at a long periodicity. Therefore, the sending periodicity of the frequency reference signal 1 needs to be greater than the sending periodicity of the synchronization signal 1. For details, refer to FIG. 7.

FIG. 7 is a diagram of a relationship between a sending periodicity of a frequency reference signal and a sending periodicity of a synchronization signal. In FIG. 7, a cross-texture block indicates the synchronization signal 1, a vertical-line texture block indicates the frequency reference signal 1, and a black block indicates another signal. The sending periodicity of the frequency reference signal 1 is an integer multiple, for example, N times, of the sending periodicity of the synchronization signal 1.

As shown in (a) in FIG. 7, one of N synchronization signals 1 is synchronously sent with the frequency reference signal 1, and sending time of the frequency reference signal 1 is earlier than sending time of the synchronization signal 1. In this way, the terminal device 120 can determine a sending location of the frequency reference signal 1, to complete the time synchronization and the frequency synchronization.

As shown in (b) in FIG. 7, one of N synchronization signals 1 is synchronously sent with the frequency reference signal 1, and sending time of the synchronization signal 1 is earlier than sending time of the frequency reference signal 1. In this way, the terminal device 120 can determine a sending location of the synchronization signal 1, to complete the time synchronization and the frequency synchronization.

As shown in (c) in FIG. 7, one of N synchronization signals 1 is synchronously sent with the frequency reference signal 1, and the frequency reference signal 1 and the synchronization signal 1 are sent at non-adjacent locations. This helps the network device 110 flexibly configure a resource used for sending a signal.

The following further describes the frequency reference signal 1.

The network device 110 may generate the frequency reference signal 1 via an orthogonal frequency division multiplexing (orthogonal frequency division multiplexing, OFDM) transmitter. Specifically, the network device 110 determines the foregoing M subcarriers via the OFDM transmitter. The M subcarriers may be consecutive subcarriers or discrete subcarriers. This is not limited. For ease of understanding, an example in which the M subcarriers are consecutive subcarriers is used below for description.

Further, the network device 110 performs modulation on the M subcarriers via the OFDM transmitter, and determines a frequency domain sequence W used for generating the frequency reference signal 1. The frequency domain sequence W may be denoted as W(k), k=$k_1$, ..., or $k_M$, k represents a number of a subcarrier, M is a quantity of allocated subcarriers, $k_1$ is a number of a 1st subcarrier, and $k_M$ is a number of a last subcarrier. W(k) is a modulated sequence, and W(k) may be a complex number or a real number. The network device 110 performs an inverse fast Fourier transform (inverse fast Fourier transform, IFFT) operation on the frequency domain sequence W(k), to obtain a time domain sequence corresponding to the frequency domain sequence W(k). The network device 110 performs cyclic prefix (cyclic prefix, CP) addition on the time domain sequence to obtain the frequency reference signal 1, performs digital-to-analog conversion on the frequency reference signal 1, and then sends the frequency reference signal 1 after up-conversion.

It can be learned from the foregoing descriptions that there is a correspondence between an element in the frequency domain sequence W and the subcarrier. For example, there is a correspondence between W ($k_1$) in the frequency domain sequence W and the 1st subcarrier in the M subcarriers, and there is a correspondence between W ($k_M$) and the last subcarrier in the M subcarriers. Therefore, that the energy of the frequency reference signal 1 is distributed on the M subcarriers may be: The energy of the frequency reference signal 1 is associated with each element in the frequency domain sequence W. For example, energy of the frequency reference signal 1 distributed on the 1st subcarrier in the M subcarriers is associated with a 1st element in the frequency domain sequence W. In other words, energy distribution of the frequency reference signal 1 on the M subcarriers may be determined by using the frequency domain sequence W.

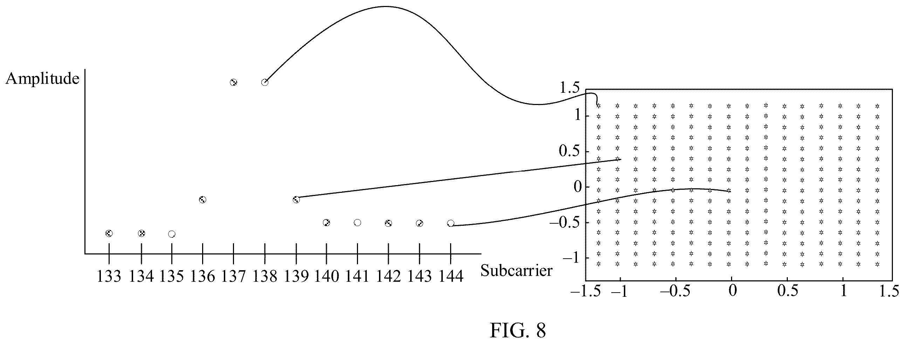

The frequency domain sequence W may alternatively be a symbol sequence W. Each element in the sequence W is in one-to-one correspondence with each of the M subcarriers. Therefore, with reference to FIG. 8, the energy distribution of the frequency reference signal 1 on the M subcarriers may be determined by using the symbol sequence W.

FIG. 8 is a diagram of a correspondence between a frequency reference signal and a subcarrier. As shown in FIG. 8, M=12 is used as an example, and a number range of the M subcarriers is 133 to 144. A symbol corresponding to each subcarrier is from a 256-quadrature amplitude modulation (quadrature amplitude modulation, QAM) constellation diagram (shown in a right figure of FIG. 8). A 5G system generates a signal (for example, the frequency reference signal 1) by using a QAM modulation scheme. The QAM modulation scheme includes 16-QAM, 64-QAM, 256-QAM, 1024-QAM, and the like. According to the foregoing modulation scheme, in this application, an appropriate symbol may be selected from a constellation diagram corresponding to the modulation scheme for transmission, so that the energy of the frequency reference signal can be unequally distributed on the M frequency domain units.

Different modulation schemes have corresponding constellation diagrams. A constellation point in the constellation diagram corresponds to one symbol. The symbol may be represented as $s_I+js_Q$, $s_I$ represents a real part, and $s_Q$ represents an imaginary part. An amplitude of the symbol may be determined by calculating $\sqrt{s_I^2 + s_Q^2}$.

Symbols corresponding to different constellation points in the constellation diagram have different amplitudes. For example, a symbol corresponding to a peripheral constellation point has a large amplitude, and a symbol corresponding to a central constellation point has a low amplitude. For descriptions of the constellation diagram, refer to an existing protocol.

In FIG. 8, the distribution of the energy of the frequency reference signal 1 is mainly concentrated on one or more of the 12 subcarriers. In an example, W(133) and W(144) are modulated symbols allocated on edge subcarriers. A symbol with a smallest amplitude is selected from the 256-QAM constellation diagram. W(133) =W(144)=0.0767+0.0767j, and the amplitude of the symbol is only $\sqrt{0.0767^2 + 0.0767^2}$=0.1085 . W(137) and W(138) are modulated symbols allocated on center subcarriers. A symbol with a highest amplitude is selected from the 256-QAM constellation diagram, that is, W(137)=W(138)=1.1504+1.1504j, and the amplitude of the symbol reaches $\sqrt{1.1504^2 + 1.1504^2}$=1.627 . Remaining subcarriers are used for transmitting symbols whose amplitudes are between 0.1085 and 1.627.

In the foregoing example, $k_{137}$ and $k_{138}$ represent the foregoing N subcarriers. In a possible implementation, a sum of amplitudes of symbols corresponding to $k_{137}$ and $k_{138}$ is greater than a sum of amplitudes of symbols transmitted on remaining subcarriers. In this way, distribution of more than 50% energy of the frequency reference signal can be concentrated on the N subcarriers, and the impact of the frequency selective fading on the frequency offset correction can be effectively mitigated.

In another example, W(133) and W(144) are modulated symbols allocated on edge subcarriers. A symbol with a largest amplitude is selected from the 256-QAM constellation diagram. W(133)=W(144) =1.1504+1.1504j, and the amplitude of the symbol reaches $\sqrt{1.1504^2 + 1.1504^2}$=1.627 . W(137) and W(138) are modulated symbols allocated on center subcarriers. A symbol with a lowest amplitude is selected from the 256-QAM constellation diagram. W(137) =W(138)=0.0767+0.0767j, and the amplitude of the symbol is $\sqrt{0.0767^2 + 0.0767^2}$=0.1085 . Remaining subcarriers are used for transmitting symbols whose amplitudes are between 0.1085 and 1.627.

In the foregoing example, $k_{133}$ and $k_{144}$ represent the foregoing N subcarriers. In a possible implementation, a sum of amplitudes of symbols corresponding to $k_{133}$ and $k_{144}$ is greater than a sum of amplitudes of symbols transmitted on remaining subcarriers. In this way, distribution of more than 50% energy of the frequency reference signal can be concentrated on N frequency domain units, and the impact of the frequency selective fading on the frequency offset correction can be effectively mitigated.

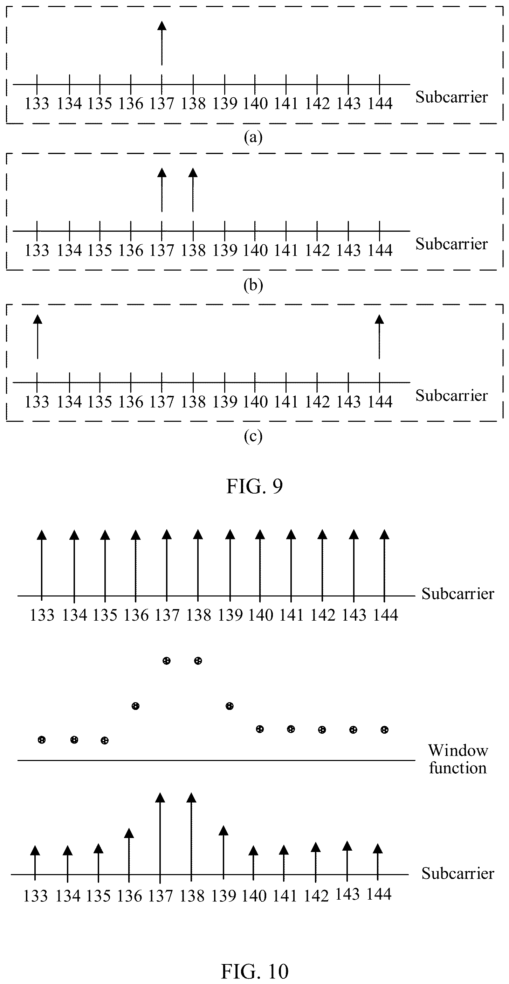

In the foregoing example, the N subcarriers may be consecutive subcarriers (for example, $k_{137}$ and $k_{138}$) or discrete subcarriers (for example, $k_{133}$ and $k_{144}$). When the N subcarriers are consecutive subcarriers, and the distribution of the energy of the frequency reference signal is mainly concentrated on the N subcarriers when the N subcarriers meet continuous distribution, the N consecutive subcarriers may undergo close fading degrees, so that impact of the frequency selective fading on frequency synchronization performed by a receive end can be mitigated. When the N subcarriers are discrete subcarriers, and the distribution of the energy of the frequency reference signal is mainly concentrated on the N subcarriers, the N discrete subcarriers may undergo close fading degrees, so that impact of the frequency selective fading on the frequency synchronization performed by the terminal device 120 can be mitigated. The description in this paragraph is also applicable to content shown in FIG. 9 and FIG. 10. Details are not described again below.

An example in which the N subcarriers are discrete subcarriers: $k_{135}$, $k_{137}$, and $k_{139}$ is used. Another example in which the N subcarriers are discrete subcarriers: $k_{133}$, $k_{144}$, and the like is used. For the latter example, a passband bandwidth of a filter of the terminal device 120 is close to a bandwidth of the M subcarriers. When the N subcarriers are distributed at two ends of the M subcarriers, if a frequency offset exists, main energy of the frequency reference signal deviates from a passband of a filter of a receiver of the terminal device 120, causing a sharp decrease in received power. Therefore, the terminal device 120 can determine that the frequency deviation exists and perform correction.

In the foregoing examples, a value of N may be less than 0.2M. When the N subcarriers mainly carry the energy of the frequency reference signal 1, the distribution of the energy of the frequency reference signal 1 is mainly concentrated on a few subcarriers by setting the value of N to be less than 0.2M. The description in this paragraph is also applicable to content shown in FIG. 9 and FIG. 10. Details are not described again below.

FIG. 9 is a diagram of another correspondence between a frequency reference signal and a subcarrier. M=12 is used as an example, and a number range of the M subcarriers is 133 to 144. As shown in (a) in FIG. 9, the network device 110 selects the subcarrier numbered $k_{137}$ to send a signal, and no signal is sent on remaining subcarriers (or a signal sent is 0). A symbol transmitted on the subcarrier numbered $k_{137}$ is selected from a QAM constellation diagram, and an amplitude of the symbol transmitted on the subcarrier is not limited. As shown in (b) in FIG. 9, the network device 110 selects the subcarriers numbered $k_{137}$ and $k_{138}$ to send a signal, and no signal is sent on remaining subcarriers (or a signal sent is 0). Symbols transmitted on the subcarriers numbered $k_{137}$ and $k_{138}$ may be selected from the QAM constellation diagram. As shown in (c) in FIG. 9, the network device 110 selects the subcarriers numbered $k_{133}$ and $k_{144}$ to send a signal, and no signal is sent on remaining subcarriers (or a signal sent is 0).

In the foregoing examples, $k_{137}$ ((a) in FIG. 9) represents the foregoing N subcarriers, $k_{137}$ and/or $k_{138}$ ((b) in FIG. 9) represents the foregoing N subcarriers, and $k_{133}$ and/or $k_{144}$ ((c) in FIG. 9) represents the foregoing N subcarriers. In addition, signal energy on a subcarrier other than the N subcarriers in the M subcarriers is 0. In this way, the distribution of the energy of the frequency reference signal is mainly concentrated on the N subcarriers, so that frequency selective fading undergone by the N subcarriers is basically the same, and impact of the frequency selective fading on the frequency offset correction is mitigated.

FIG. 10 is a diagram of still another correspondence between a frequency reference signal and a subcarrier. As shown in FIG. 10, a frequency domain sequence W includes a frequency domain sequence Q and a window function T ((c) in FIG. 10). The window function T is denoted as T(k), and k=$k_1$, ..., or $k_M$. T(k) is a modulated sequence, and T(k) may be a complex number or a real number. Amplitudes of symbols corresponding to all elements in the frequency domain sequence Q are the same ((a) in FIG. 10), and amplitudes of symbols corresponding to all elements in the window function T are different ((b) in FIG. 10).

In this application, the frequency domain sequence Q can be generated by using a Zadoff-Chu sequence, a Gold sequence, an M sequence, or another sequence. The window function T may be an existing window function, for example, a Hamming window or a raised cosine window. The window function T may alternatively be redefined. For example, the window function T is constructed based on an amplitude of a constellation point. For details, refer to the descriptions in FIG. 8.

According to the content shown in FIG. 8 to FIG. 10, the distribution of the energy of the frequency reference signal is mainly concentrated on one or more subcarriers. Frequency selective fading undergone by the one or more subcarriers is close, and the one or more subcarriers also have energy that is basically the same at the receive end, so that impact of the frequency selective fading on the frequency offset correction can be mitigated.

In FIG. 8 to FIG. 10, in this application, an appropriate symbol can be selected from a constellation diagram, for example, a 16-QAM constellation diagram, a 64-QAM constellation diagram, or a 1024-QAM constellation diagram for transmission, so that the energy of the frequency reference signal can be unequally distributed on the foregoing M subcarriers.

Finally, an apparatus embodiment in embodiments of this application is described.

To implement functions in the methods provided in this application, the terminal device 120 and the network device 110 each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

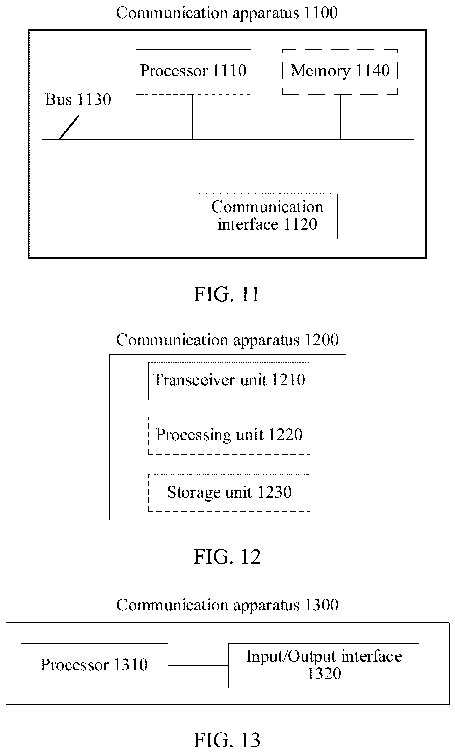

FIG. 11 is a block diagram of a communication apparatus 1100 according to an embodiment of this application. The communication apparatus 1100 includes a processor 1110 and a communication interface 1120. The processor 1110 and the communication interface 1120 may be connected to each other through a bus 1130. The communication apparatus 1100 may be a network device 110 or may be a terminal device 120.

Optionally, the communication apparatus 1100 may further include a memory 1140. The memory 1140 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1140 is configured for related instructions and data.

The processor 1110 may be one or more central processing units (central processing units, CPUs). When the processor 1110 is one CPU, the CPU may be a single-core CPU, or may be a multi-core CPU.

When the communication apparatus 1100 is the terminal device 120, for example, the processor 1110 is configured to perform following operations: receiving a frequency reference signal 1 from the network device 110, and performing frequency synchronization with the network device 110 based on the frequency reference signal 1.

When the communication apparatus 1100 is the network device 110, for example, the processor 1110 is configured to perform following operation: sending the frequency reference signal 1 to the terminal device 120.

The foregoing content is merely used as an example for description. When the communication apparatus 1100 is the network device 110/terminal device 120, the communication apparatus 1100 is responsible for performing the methods or the steps related to the network device 110/terminal device 120 in the foregoing method embodiments.

The foregoing descriptions are merely an example for description. For specific content, refer to content shown in the foregoing method embodiments. For an implementation of the operations in FIG. 11, refer to the corresponding descriptions of the method embodiments shown in FIG. 6 to FIG. 10.

FIG. 12 is a block diagram of a communication apparatus 1200 according to an embodiment of this application. The communication apparatus 1200 may be the network device 110 or the terminal device 120, or may be a chip or a module in the network device 110 or the terminal device 120, and is configured to implement the methods in the foregoing embodiments. The communication apparatus 1200 includes a transceiver unit 1210. The following describes the transceiver unit 1210 and a processing unit 1220 by using examples.

The transceiver unit 1210 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described again below.

When the communication apparatus 1200 is the terminal device 120, for example, the transceiver unit 1210 is configured to receive a frequency reference signal 1 from the network device 110, and the processing unit 1220 is configured to perform frequency synchronization with the network device 110 based on the frequency reference signal 1.

When the communication apparatus 1200 is the network device 110, for example, the transceiver unit 1210 is configured to send a frequency reference signal 1 to the terminal device 120, and the processing unit 1220 is configured to generate the frequency reference signal 1.

The foregoing content is merely used as an example for description. When the communication apparatus 1200 is the network device 110/terminal device 120, the communication apparatus 1200 is responsible for performing the methods or the steps related to the network device 110/terminal device 120 in the foregoing method embodiments.

Optionally, the communication apparatus 1200 further includes a storage unit 1230. The storage unit 1230 is configured to store a program or code used for performing the foregoing methods.

The apparatus embodiments shown in FIG. 11 and FIG. 12 are used for implementing the content described in FIG. 6 to FIG. 10. For specific execution steps and methods of the apparatuses shown in FIG. 11 and FIG. 12, refer to the content described in the foregoing method embodiments.

FIG. 13 is a block diagram of a communication apparatus 1300 according to an embodiment of this application. The communication apparatus 1300 is configured to implement functions of the network device 110/terminal device 120. The communication apparatus 1300 may be a chip in the network device 110/terminal device 120.

The communication apparatus 1300 includes an input/output interface 1320 and a processor 1310. The input/output interface 1320 may be an input/output circuit. The processor 1310 may be a signal processor, a chip, or another integrated circuit that can implement the methods in this application. The input/output interface 1320 is configured to input or output a signal or data.

For example, when the communication apparatus 1300 is the terminal device 120, the input/output interface 1320 is configured to receive a frequency reference signal 1 from the network device 110. The processor 1310 is configured to perform frequency synchronization with the network device 110 based on the frequency reference signal 1.

For example, the communication apparatus 1300 is the network device 110, and the input/output interface 1320 is configured to send the frequency reference signal 1 to the terminal device 120. The processor 1310 is configured to generate the frequency reference signal 1.

In a possible implementation, the processor 1310 executes instructions stored in a memory, to implement a function implemented by the network device or the terminal device.

Optionally, the communication apparatus 1300 further includes the memory.

Optionally, the processor and the memory are integrated together.

Optionally, the memory is outside the communication apparatus 1300.

In a possible implementation, the processor 1310 may be a logic circuit, and the processor 1310 inputs/outputs a message or signaling through the input/output interface 1320. The logic circuit may be a signal processor, a chip, or another integrated circuit that can implement the method in embodiments of this application.

The foregoing descriptions of the communication apparatus 1300 are merely an example for description. The communication apparatus 1300 can be configured to perform the method in the foregoing embodiments. For specific content, refer to the descriptions of the foregoing method embodiments. Details are not described herein again.

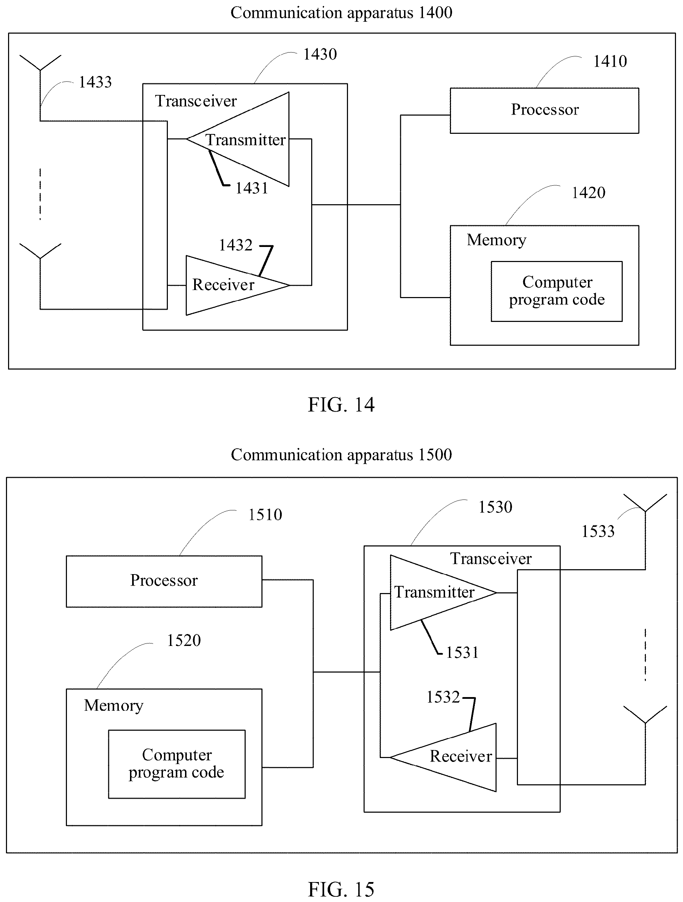

FIG. 14 is a block diagram of a communication apparatus 1400 according to an embodiment of this application. The communication apparatus 1400 may be the network device 110 or a chip. The communication apparatus 1400 may be configured to perform operations performed by the network device 110 in the foregoing method embodiments shown in FIG. 6 to FIG. 10.

When the communication apparatus 1400 is the network device 110, for example, a base station, FIG. 14 is a simplified diagram of a structure of the base station. The base station includes a module 1410, a module 1420, and a module 1430. The module 1410 is mainly configured to: perform baseband processing, control the base station, and so on. The module 1410 is usually a control center of the base station, may be usually referred to as a processor, and is configured to control the base station to perform a processing operation on a side of the network device in the foregoing method embodiments. The module 1420 is mainly configured to store computer program code and data. The module 1430 is mainly configured to: receive and send radio frequency signals, and perform conversion between the radio frequency signal and a baseband signal. The module 1430 may be usually referred to as a transceiver module, a transceiver machine, a transceiver circuit, a transceiver, or the like. The transceiver module in the module 1430 may also be referred to as a transceiver machine, a transceiver, or the like. The transceiver module includes an antenna 1433 and a radio frequency circuit (not shown in FIG. 14). The radio frequency circuit is mainly configured to perform radio frequency processing. Optionally, in the module 1430, a component configured to implement a receiving function may be considered as a receiver, and a component configured to implement a sending function may be considered as a transmitter. In other words, the module 1430 includes a receiver 1432 and a transmitter 1431. The receiver may also be referred to as a receiving module, a receiver machine, a receiver circuit, or the like. The transmitter may be referred to as a transmitting module, a transmitter machine, a transmitter circuit, or the like.

The module 1410 and the module 1420 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share the one or more processors, or the plurality of boards share the one or more memories, or the plurality of boards share the one or more processors at the same time.

For example, in an implementation, the transceiver module in the module 1430 is configured to perform a process related to sending and receiving and performed by the network device in the embodiments shown in FIG. 6 to FIG. 10. The processor in the module 1410 is configured to perform a process related processing and performed by the network device 110 in the embodiments shown in FIG. 6 to FIG. 10.

In another implementation, the processor in the module 1410 is configured to perform a process related processing and performed by a communication device in the embodiments shown in FIG. 6 to FIG. 10.

In another implementation, the transceiver module in the module 1430 is configured to perform a process related receiving and sending and performed by a communication device in the embodiments shown in FIG. 6 to FIG. 10.

It should be understood that FIG. 14 is merely an example rather than a limitation. The network device 110 including the processor, the memory, and the transceiver may not depend on the structures shown in FIG. 11 to FIG. 13.

When the communication apparatus 1400 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

FIG. 15 is a block diagram of a communication apparatus 1500 according to an embodiment of this application. The communication apparatus 1500 may be the terminal device 120, a processor of the terminal device 120, or a chip. The communication apparatus 1500 may be configured to perform an operation performed by the terminal device 120 or a communication device in the foregoing method embodiments.

When the communication apparatus 1500 is the terminal device 120, FIG. 15 is a diagram of a simplified structure of the terminal device. As shown in FIG. 15, the terminal device includes a processor, a memory, and a transceiver. The memory may store computer program code. The transceiver includes a transmitter 1531, a receiver 1532, a radio frequency circuit (not shown in FIG. 15), an antenna 1533, and an input/output apparatus (not shown in FIG. 15).

The processor is mainly configured to: process a communication protocol and communication data, control the terminal device, execute a software program, process data of the software program, and so on. The memory is mainly configured to store the software program and data. The radio frequency circuit is mainly configured to: perform conversion between a baseband signal and a radio frequency signal, and process the radio frequency signal. The antenna is mainly configured to receive and send radio frequency signals in a form of an electromagnetic wave. The input/output apparatus, for example, a touchscreen, a display screen, or a keyboard, is mainly configured to receive data that is input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in the form of the electromagnetic wave through the antenna. When data is sent to the terminal device, the radio frequency circuit receives the radio frequency signal through the antenna, converts the radio frequency signal into the baseband signal, and outputs the baseband signal to the processor. The processor converts the baseband signal into data, and processes the data. For ease of description, FIG. 15 merely shows one memory, one processor, and one transceiver. In an actual terminal device product, there may be one or more processors and one or more memories. The memory may also be referred to as a storage medium, a storage device, or the like. The memory may be disposed independently of the processor, or may be integrated with the processor. This is not limited in this embodiment of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 15, the terminal device includes a processor 1510, a memory 1520, and a transceiver 1530. The processor 1510 may also be referred to as a processing unit, a processing board, a processing module, a processing apparatus, or the like. The transceiver 1530 may also be referred to as a transceiver unit, a transceiver machine, a transceiver apparatus, or the like.

Optionally, a component that is in the transceiver 1530 and that is configured to implement a receiving function may be considered as a receiving module, and a component that is in the transceiver 1530 and that is configured to implement a sending function may be considered as a sending module. That is, the transceiver 1530 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1510 is configured to perform processing actions on a side of the terminal device 120 in the embodiments shown in FIG. 6 and FIG. 10, and the transceiver 1530 is configured to perform receiving and sending actions on the side of the terminal device 120 in FIG. 6 and FIG. 10.

For example, in an implementation, the processor 1510 is configured to perform processing actions on a side of the terminal device 120 in the embodiments shown in FIG. 6 and FIG. 10, and the transceiver 1530 is configured to perform receiving and sending actions on the side of the terminal device 120 in FIG. 6 and FIG. 10.

It should be understood that FIG. 15 is merely an example rather than a limitation. The terminal device including the transceiver module and the processing module may not depend on the structures shown in FIG. 11 to FIG. 13.

When the communication apparatus 1500 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a chip. The chip includes a processor, configured to invoke instructions from a memory and run the instructions stored in the memory, to cause a communication device on which the chip is installed to perform the methods in the foregoing examples.

This application further provides a chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes a memory. The memory is configured to store a computer program or the code.

This application further provides a processor. The processor is configured to couple to a memory, and configured to perform the methods and the functions of the network device or the terminal device in any one of the foregoing embodiments.

This application provides a computer program product including instructions. When the computer program product runs on a computer, the method in the foregoing embodiments is implemented.

This application further provides a computer program. When the computer program is run on a computer, the method in the foregoing embodiments is implemented.

This application further provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in another manner. For example, the foregoing described apparatus embodiment is merely an example. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Units described as separate parts may or may not be physically separate, and parts displayed as units may or may not be physical units, in other words, may be located at one position, or may be distributed on a plurality of network units. Some or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

   generating, by a network device, a frequency reference signal, wherein the frequency reference signal is used for frequency synchronization between the network device and a terminal device; and
   sending, by the network device, the frequency reference signal to the terminal device by using M frequency domain units, wherein
   a ratio of a sum of energy of the frequency reference signal carried by N frequency domain units in the M frequency domain units to total energy of the frequency reference signal is greater than or less than a ratio of N to M, both N and M are positive integers, and N is less than M.

2. The method according to claim 1, wherein the N frequency domain units are consecutive frequency domain units, or the N frequency domain units are discrete frequency domain units.

3. The method according to claim 2, wherein the N frequency domain units are distributed at two ends of the M frequency domain units.

4. The method according to any one of claims 1 to 3, wherein N is less than 0.2M, and the ratio of the sum of the energy of the frequency reference signal carried by the N frequency domain units to the total energy of the frequency reference signal is greater than or equal to 0.2.

5. The method according to any one of claims 1 to 4, wherein a sum of amplitudes of symbols transmitted by the N frequency domain units is greater than a sum of amplitudes of symbols transmitted by frequency domain units other than the N frequency domain units in the M frequency domain units.

6. The method according to any one of claims 1 to 5, wherein a sum of energy of the frequency domain units other than the N frequency domain units in the M frequency domain units is zero.

7. The method according to any one of claims 1 to 6, wherein the method further comprises:

   sending, by the network device, a configuration parameter of the frequency reference signal to the terminal device, wherein
   the configuration parameter comprises at least one of the following:
   a sending periodicity of the frequency reference signal, a bandwidth of the frequency reference signal, duration of the frequency reference signal, a frequency domain sequence used by the frequency reference signal, and a window function used by the frequency reference signal.

8. The method according to any one of claims 1 to 7, wherein a modulation scheme of the frequency reference signal comprises at least one of the following:
   16-quadrature amplitude modulation QAM, 64-QAM, 256-QAM, or 1024-QAM.

9. The method according to any one of claims 1 to 8, wherein the method further comprises:

   sending, by the network device, a synchronization signal to the terminal device, wherein the synchronization signal is used for time synchronization between the network device and the terminal device; and
   a sending periodicity of the synchronization signal is the same as the sending periodicity of the frequency reference signal, or a sending periodicity of the synchronization signal is different from the sending periodicity of the frequency domain reference signal.

10. The method according to claim 9, wherein the sending periodicity of the frequency reference signal is an integer multiple of the sending periodicity of the synchronization signal.

11. A communication method, comprising:

    receiving, by a terminal device, a frequency reference signal from a network device by using M frequency domain units, wherein the frequency reference signal is used for frequency synchronization between the network device and the terminal device; and
    performing, by the terminal device, the frequency synchronization based on the frequency reference signal, wherein
    a ratio of a sum of energy of the frequency reference signal carried by N frequency domain units in the M frequency domain units to total energy of the frequency reference signal is greater than or less than a ratio of N to M, both N and M are positive integers, and N is less than M.

12. The method according to claim 11, wherein the N frequency domain units are consecutive frequency domain units, or the N frequency domain units are discrete frequency domain units.

13. The method according to claim 12, wherein the N frequency domain units are distributed at two ends of the M frequency domain units.

14. The method according to any one of claims 11 to 13, wherein when N is less than 0.2M, the ratio of the sum of the energy of the frequency reference signal carried by the N frequency domain units to the total energy of the frequency reference signal is greater than or equal to 0.2.

15. The method according to any one of claims 11 to 14, wherein a sum of amplitudes of symbols transmitted by the N frequency domain units is greater than a sum of amplitudes of symbols transmitted by frequency domain units other than the N frequency domain units in the M frequency domain units.

16. The method according to any one of claims 11 to 15, wherein a sum of energy of the frequency domain units other than the N frequency domain units in the M frequency domain units is zero.

17. The method according to any one of claims 11 to 16, wherein the method further comprises:

receiving, by the terminal device, a configuration parameter of the frequency reference signal from the network device, wherein
the configuration parameter comprises at least one of the following:
a sending periodicity of the frequency reference signal, a bandwidth of the frequency reference signal, duration of the frequency reference signal, a frequency domain sequence used by the frequency reference signal, and a window function used by the frequency reference signal.

18. The method according to any one of claims 11 to 17, wherein a modulation scheme of the frequency reference signal comprises at least one of the following:
16-quadrature amplitude modulation QAM, 64-QAM, 256-QAM, or 1024-QAM.

19. The method according to any one of claims 11 to 18, wherein the method further comprises:

receiving, by the terminal device, a synchronization signal from the network device, wherein the synchronization signal is used for time synchronization between the network device and the terminal device; and
performing, by the terminal device, the time synchronization based on the synchronization signal, wherein
a sending periodicity of the synchronization signal is the same as the sending periodicity of the frequency reference signal, or a sending periodicity of the synchronization signal is different from the sending periodicity of the frequency domain reference signal.

20. The method according to claim 19, wherein the sending periodicity of the frequency reference signal is an integer multiple of the sending periodicity of the synchronization signal.

21. A communication apparatus, comprising a processor, wherein the processor is configured to cause, by executing a computer program or instructions, or by using a logic circuit,

the communication apparatus to perform the method according to any one of claims 1 to 10; or
the communication apparatus to perform the method according to any one of claims 11 to 20.

22. The communication apparatus according to claim 21, wherein the communication apparatus further comprises a memory, and the memory is configured to store the computer program or the instructions.

23. The communication apparatus according to claim 21 or 22, wherein the communication apparatus further comprises a communication interface, and the communication interface is configured to input a signal and/or output a signal.

24. A communication apparatus, comprising a logic circuit and an input/output interface, wherein the input/output interface is configured to input a signal and/or output a signal; and

the logic circuit is configured to perform the method according to any one of claims 1 to 10; or
the logic circuit is configured to perform the method according to any one of claims 11 to 20.

25. A computer-readable storage medium, wherein the computer-readable storage medium stores a computer program or instructions; and when the computer program or the instructions are run on a computer,

the method according to any one of claims 1 to 10 is performed; or

the method according to any one of claims 11 to 20 is performed.

26. A computer program product, comprising instructions, wherein when the instructions are run on a computer,

the method according to any one of claims 1 to 10 is performed; or
the method according to any one of claims 11 to 20 is performed.

FIG. 1

FIG. 2

FIG. 3

(a)

(b)

FIG. 4

FIG. 5

```
┌─────────────────────┐                                    ┌─────────────────────┐
│ Network device 110  │                                    │ Terminal device 120 │
└─────────────────────┘                                    └─────────────────────┘
           │                                                           │
           │    S610: Send a frequency reference signal 1 by using M   │
           │      frequency domain units, where a ratio of a sum of    │
           │    energy of the frequency reference signal 1 carried by N│
           │      frequency domain units in the M frequency domain     │
           │     units to total energy of the frequency reference      │
           │       signal 1 is not equal to a ratio of N to M          │
           │──────────────────────────────────────────────────────────▶│
           │                                                           │
           │        ┌──────────────────────────────────────────────┐  │
           │        │ S620: Perform frequency synchronization between│  │
           │        │ the network device 110 and the terminal device │  │
           │        │   120 based on the frequency reference signal 1│  │
           │        └──────────────────────────────────────────────┘  │
           │                                                           │
```

FIG. 6

Synchronization            Another      Frequency
signal 1                signal   reference signal 1

(a)

(b)

(c)

FIG. 7

FIG. 8

FIG. 9

FIG. 10

Communication apparatus 1100

Processor 1110 | Memory 1140 |

Bus 1130

Communication
interface 1120

FIG. 11

Communication apparatus 1200

Transceiver unit 1210

Processing unit 1220

Storage unit 1230

FIG. 12

Communication apparatus 1300

Processor 1310

Input/Output interface
1320

FIG. 13

Communication apparatus 1400

FIG. 14

Communication apparatus 1500

FIG. 15

## INTERNATIONAL SEARCH REPORT

| International application No. |
| --- |
| **PCT/CN2024/084258** |

### A. CLASSIFICATION OF SUBJECT MATTER

H04L 27/26(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, CNKI, DWPI, ENTXT, 3GPP, IEEE: 频率, 偏移, 偏差, 同步, 参考信号, 频域, 子载波, 资源块, 能量, 比例, 比值, frequency, reference signal, synchron+, domain, subcarrier, resource block, energy

### C. DOCUMENTS CONSIDERED TO BE RELEVANT

| Category* | Citation of document, with indication, where appropriate, of the relevant passages | Relevant to claim No. |
| --- | --- | --- |
| A | CN 111431678 A (TELECOMMUNICATIONS TECHNOLOGY RESEARCH INSTITUTE CO., LTD.) 17 July 2020 (2020-07-17)<br>entire document | 1-26 |
| A | CN 113746614 A (HUAWEI TECHNOLOGIES CO., LTD.) 03 December 2021 (2021-12-03)<br>entire document | 1-26 |
| A | WO 2021189216 A1 (HUAWEI TECHNOLOGIES CO., LTD.) 30 September 2021 (2021-09-30)<br>entire document | 1-26 |
| A | Huawei et al. "R1-1704242 "Reference signal for fine time and frequency tracking""<br>*3GPP tsg_ran\WG1_RL1*. No. TSGR1_88b, 25 March 2017 (2017-03-25),<br>entire document | 1-26 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 June 2024** | **27 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2024/084258**

| Patent document cited in search report | | | Publication date (day/month/year) | Patent family member(s) | | | Publication date (day/month/year) |
|---|---|---|---|---|---|---|---|
| CN | 111431678 | A | 17 July 2020 | TW | 202027522 | A | 16 July 2020 |
| | | | | TWI | 762850 | B | 01 May 2022 |
| | | | | WO | 2020143457 | A1 | 16 July 2020 |
| | | | | US | 2022077983 | A1 | 10 March 2022 |
| | | | | JP | 2022516670 | A | 01 March 2022 |
| | | | | JP | 7457028 | B2 | 27 March 2024 |
| | | | | KR | 20210107838 | A | 01 September 2021 |
| | | | | EP | 3910826 | A1 | 17 November 2021 |
| | | | | EP | 3910826 | A4 | 23 February 2022 |
| CN | 113746614 | A | 03 December 2021 | None | | | |
| WO | 2021189216 | A1 | 30 September 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310405730
- CN 202310575837